(19) Europäisches Patentamt
European Patent Office
Office européen des brevets

(11) Veröffentlichungsnummer : **0 143 407**
**B1**

# (12) EUROPÄISCHE PATENTSCHRIFT

(45) Veröffentlichungstag der Patentschrift : **12.11.86**

(51) Int. Cl.⁴ : **C 08 G 65/38**, C 08 G 65/40

(21) Anmeldenummer : **84113869.6**

(22) Anmeldetag : **16.11.84**

## (54) Verfahren zur Herstellung von aromatischen Polyäthern.

(30) Priorität : **24.11.83 DE 3342433**

(43) Veröffentlichungstag der Anmeldung : **05.06.85 Patentblatt 85/23**

(45) Bekanntmachung des Hinweises auf die Patenterteilung : **12.11.86 Patentblatt 86/46**

(84) Benannte Vertragsstaaten : **BE DE FR GB IT NL**

(56) Entgegenhaltungen :
**DE-A- 1 595 710**
**GB-A- 1 276 649**

(73) Patentinhaber : **HOECHST AKTIENGESELLSCHAFT**
**Postfach 80 03 20**
**D-6230 Frankfurt am Main 80 (DE)**

(72) Erfinder : **Deckers, Hellmuth, Dr.**
**Obere Sohlstrasse 2c**
**D-6507 Ingelheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 143 407 B1

Jouve, 18, rue St-Denis, 75001 Paris, France

**Beschreibung**

Aromatische Polyäther, die neben der Ätherbindung auch andere elektronegative Gruppen in der Hauptkette enthalten, sind als wertvolle Polymerklasse mit hohem Eigenschaftsniveau bekannt.

Sie lassen sich herstellen durch eine elektrophile Polykondensationsreaktion (Friedel-Crafts-Reaktion) von mehrkernigen aromatischen Säurehalogeniden (wobei mindestens ein Arylrest elektronenliefernde Substituenten tragen muß), beispielsweise eines Phenoxyarylsäurechlorids, oder durch Kondensation eines Disäurehalogenids mit einem elektronenreichen Aromaten, beispielsweise einem Diaryläther. Solche Verfahren sind beispielsweise beschrieben in der US-A-3 065 205.

Eine andere Synthesemöglichkeit ist die nukleophile Polykondensation von Halogenphenolen, wobei die Halogengruppe durch ortho- oder paraständige elektronegative Substituenten aktiviert ist, oder von zweiwertigen, ein- oder mehrkernigen Phenolen mit aktivierten Dihalogenaromaten. Bei der nukleophilen Polykondensation ist das aus dem Phenol durch Einwirken von Alkalien gebildete Phenolation das eigentliche Agens. Diese Verfahrensweise ist beispielsweise beschrieben in der DE-A-1 545 106 und in der CA-A-847 963.

Die Bildung der Phenolat-Ionen erfolgt entweder durch Umsetzen des Phenols mit z. B. Alkalihydroxiden und anschließendes Enfernen des Reaktionswassers durch azeotrope Destillation (DE-A-1 545 106) oder aber durch Zufügen von Alkalicarbonaten oder -bicarbonaten zu der Kondensationsmischung (CA-A-847 963). Als Alkalicarbonate werden in der CA-Patentschrift insbesondere Natrium- und Kaliumcarbonat eingesetzt. Lithiumcarbonat wird demgegenüber als wenig reaktiv bezeichnet, während Rubidium- und Cäsiumcarbonat aus Preisgründen weniger bevorzugt sind. Auch Kombinationen von Alkalimetallcarbonaten wurden bereits als Kondensationshilfsmittel eingesetzt, so in der DE-A-2 803 873, wo die Kombination von (viel) Natrium- mit (wenig) Kalium-carbonat verwendet wird. Die Gesamtmenge der Carbonate ist dabei so bemessen, daß pro Mol Hydroxylgruppen ein bis 1,2 Mol Alkalimetallatome vorhanden sind.

In der Literatur findet sich jedoch kein Hinweis auf die Benutzung anderer Carbonate als die der Alkaligruppe. In der Tat werden bei Einsatz anderer Carbonate auch nur niedermolekulare Produkte erhalten, die beim Pressen spröde und brüchige Filme ergeben, wie in den nachfolgenden Beispielen gezeigt wird.

Überraschenderweise und für den Fachmann keineswegs vorhersehbar wurde nun gefunden, daß man durch nukleophile Kondensation hochmolekulare Polyäther erhält, wenn man das für sich allein unwirksame oder zu wenig wirksame Carbonat eines Metalls, das ausgewählt ist aus der Gruppe Lithium oder der Erdalkalimetalle, gemeinsam mit einer geringen, für sich allein nicht ausreichenden Menge eines Alkalimetallcarbonats, ausgewählt aus der Gruppe Natrium, Kalium, Rubidium oder Cäsium als Kondensationshilfsmittel einsetzt.

Die Erfindung betrifft demnach also ein Verfahren zur Herstellung von aromatischen Polyäthern durch Kondensation der Reaktionspartner in Gegenwart von Metall-Carbonaten als Kondensationshilfsmittel, gegebenenfalls in Gegenwart von anderen Zusatzstoffen, sowie gegebenenfalls eines Lösungsmittels, dadurch gekennzeichnet, daß man als Kondensationshilfsmittel Metallcarbonate einsetzt, die Gemische darstellen aus Metall-Carbonaten von

(a) Lithium- und/oder Erdalkalicarbonat und

(b) Natrium-, Kalium-, Rubidium- und/oder Cäsiumcarbonat.

Erfindungswesentlich ist dementsprechend der Einsatz eines Gemisches von Carbonaten, bestehend aus einem (oder mehreren) Carbonat(en) der Gruppe (a) und einem (oder mehreren) Carbonat(en) der Gruppe (b) als Kondensationsmittel. Bei den Carbonaten der Gruppe (a) kann es sich dabei auch um basische Carbonate handeln. Weiterhin können sowohl bei der Gruppe (a) wie auch bei der Gruppe (b) Bikarbonate zum Einsatz kommen.

Da die Kondensationsreaktion, wie üblich, unter weitgehend wasserfreien Bedingungen durchgeführt wird, sollen auch die Carbonate vorzugsweise weitgehend wasserfrei sein.

Unter den Erdalkalicarbonaten sind Calcium-, Strontium und Bariumcarbonat bevorzugt. Besonders bevorzugt ist Calciumcarbonat (Kreide), gegebenenfalls auch als Calcium/Magnesium-Doppel-carbonat (Dolomit). Von den Carbonaten der Gruppe (b) sind Natrium- und Kaliumcarbonat bevorzugt.

Die Korngröße der erfindungsgemäß eingesetzten Carbonate ist an und für sich nicht kritisch; jedoch werden diese vorzugsweise in feingemahlenem Zustand eingesetzt und besitzen Korngrößen von zumeist kleiner als 0,3 mm. Vorzugsweise liegen diese zwischen 1 und 250 µm.

Die Gesamtmenge an Carbonat ist im allgemeinen so bemessen, daß pro Mol Hydroxylgruppen mindestens ein Mol Metallatome vorhanden sind. In manchen Fällen kann sich ein Überschuß an Carbonat von bis zu 20 % empfehlen, so daß die Gesamtmenge an Carbonat erfindungsgemäß in den meisten Fällen 1 bis 1,2 Mol Metallatome pro Mol Hydroxylgruppen beträgt.

Das Mengenverhältnis von (den) Carbonat(en) der Gruppe (a) zu dem (den) Carbonat(en) der Gruppe (b) kann in weiten Grenzen schwanken. Jedoch wird (werden) das Carbonat (die Carbonate) der Gruppe (a), die für sich allein praktisch nicht wirksam sind, im Regelfall im Überschuß verwendet und mit einer Menge eines Carbonates oder Carbonatgemisches der Gruppe (b) kombiniert, die für sich allein im allgemeinen nicht ausreichend wäre. Dieses Mengenverhältnis beträgt daher zweckmäßigerweise 40 : 60

bis 99 : 1, vorzugsweise 80 : 20 bis 95 : 5.

Unter dem Begriff « aromatische Polyäther » seien hier Polymere verstanden, die neben dem Sauerstoffatom der Ätherbindung auch andere Atome und/oder Gruppen in der Hauptkette enthalten können, wie Schwefelatome und/oder Carbonyl-, Imino-, Sulfonyl- und/oder Sulfoxidgruppen udgl. Die erfindungsgemäß erhältlichen Polyäther sind hochmolekulare Verbindungen, deren relative Viskositäten (gemessen in einer Lösung von 0,1 g des Polymeren in 100 ml konzentrierter Schwefelsäure) im allgemeinen bei 1,2 bis 5,0, vorzugsweise 1,8 bis 4,5 liegen.

Die Herstellung dieser Polyäther erfolgt erfindungsgemäß unter ansonsten üblichen Bedingungen und unter Umsatz der bekannten Reaktionspartner (Monomeren), also beispielsweise von zweiwertigen Phenolen mit aktivierten aromatischen Dihalogenverbindungen oder von mehrkernigen aktivierten Halogenphenolen, in denen das Halogen an einem anderen aromatischen Kern als die Hydroxylgruppe steht, oder von derartigen Halogenphenolen mit einander äquivalenten Mengen von zweiwertigen Phenolen und aktivierten aromatischen Dihalogenverbindungen.

Im vorstehend erstgenannten Fall, also bei Umsatz von zweiwertigen Phenolen mit aktivierten aromatischen Dihalogenverbindungen, beträgt das Molverhältnis der beiden Reaktanden normalerweise zwischen 0,9 bis 1,1 zu 1,0. Vorzugsweise setzt man die Verbindungen im Molverhältnis von 1 : 1 oder mit einem geringen Überschuß der Dihalogenverbindung ein.

Als zweiwertige Phenole kommen einkernige Diphenole, wie Hydrochinon, Resorcin oder deren Homologe wie z. B. Methylhydrochinon in Betracht. Geeignete mehrkernige zweiwertige Phenole sind (vor allem die schwach sauren) Dihydroxydiphenylalkane oder deren Derivate, die sich durch Kondensation von Oxoverbindungen mit ggf. substituierten Phenolen herstellen lassen, wie z. B. 2,2-Bis(4'-hydroxyphenyl)-propan, Bis(4-hydroxyphenyl)-methan, 2,2-Bis(3',5'-dimethyl-4'-hydroxyphenyl)-propan.

Andere geeignete Diphenole sind solche, in denen zwei Phenolreste durch eine direkte Bindung verknüpft sind oder durch Atome bzw. Gruppen wie Sauerstoff, Schwefel, Carbonyl-, Sulfonyl-, Sulfoxid-, Phenylen-, Oxyphenylenoxy-, Carbonylphenylencarbonyl-. Diese polynuklearen Diphenole lassen sich durch die Formel

$$HO-\underset{}{\overset{(Y)_m}{\overset{|}{Ar}}}-X-\overset{(Y')_n}{\overset{|}{Ar}}-OH \qquad (1)$$

beschreiben, wobei Ar für einen Arylrest, vorzugsweise Phenyl, steht, der durch Gruppen Y und Y' substituiert sein kann. Y und Y' stehen für Alkylgruppen oder Alkoxygruppen mit jeweils zweckmäßigerweise 1 bis 8, vorzugsweise 1 bis 4 C-Atomen, Aryl- oder Aryloxygruppen (Aryl vorzugsweise Phenyl oder Naphthyl), Halogenatome, m und n sind ganze Zahlen von 0 bis 4 (bei Ar = Phenylen) oder mehr (bei anderen Arylresten wie z. B. Naphthylen). X ist eine Alkyliden- oder Cycloalkylidengruppe (bei Bisphenolen hergestellt aus Phenol und Oxoverbindung wie Aceton, Formaldehyd, Cyclohexanon etc.) oder steht für z. B. für eine direkte Bindung,

—O—, —S—, —SO—, $—SO_2—$, —CO—,
$—C_6H_4—$,
$—O—C_6H_4—O—$,
$—CO—C_6H_4—CO—$ etc.

Beispiele für derartige Diphenole sind : 2,2-Bis(4'-hydroxyphenyl)propan, 2,2-Bis(4'-hydroxy-3',5'-dimethylphenyl)propan, Bis(4-hydroxyphenyl)methan, Bis(4-hydroxyphenyl)cyclohexan, 1,1-Bis-(4'-hydroxyphenyl)äthan, 2,2-Bis(4'-hydroxyphenyl)-1,1,1,3,3,3-hexafluorpropan, 3,3'-Dihydroxydiphenyl, 4,4'-Dihydroxydiphenyl, 3,4'-Dihydroxydiphenyl, 4,4'-Dihydrodiphenyläther, 4,4'-Dihydroxydiphenylsulfid, 4,4'-Dihydroxydiphenylsulfoxid, 4,4'-Dihydroxydiphenylsulfon, 4,4'-Dihydroxybenzophenon, 1,4-Bis(4'-hydroxyphenoxy)benzol, 1,3-Bis(4'-hydroxyphenoxy)benzol, 1,4-Bis(4'-hydroxybenzoyl)benzol, 1,3-Bis(4'-hydroxybenzoyl)benzol, 1,4-Bis(4'-hydroxybenzolsulfonyl)benzol, 1,3-Bis(4'-hydroxybenzolsulfonyl)benzol.

Die aktivierten aromatischen Dihalogenverbindungen sind ein- oder mehrkernige Verbindungen, deren Halogenatome durch elektronegative Substituenten in o- oder p-Stellung zu ihnen aktiviert sind. Bei mehrkernigen Verbindungen befinden sich die Halogenatome vorzugsweise an verschiedenen Benzolkernen ; die elektronegativen Substituenten können hier das Verbindungsglied zwischen den Benzolkernen sein. Geeignete Dihalogenverbindungen sind durch die Formel

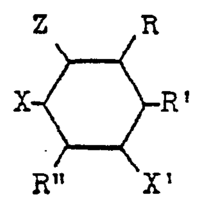

und (2)

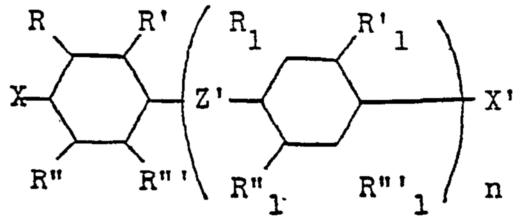 (3)

beschrieben, wobei R, R', R'', R''', $R_1$, $R'_1$, $R''_1$, $R_1'''$ gleich oder verschieden sein können und aus der Gruppe H, Alkyl oder Alkoxy (jeweils zweckmäßigerweise mit 1 bis 8, vorzugsweise 1 bis 4 C-Atome), Aryl oder Aryloxy (Aryl vorzugsweise Phenyl oder Naphthyl) gewählt werden können. Weiter können R und R', R'' und R''' sowie $R_1''$ und $R_1'''$ auch Alkylidenbrücken oder ankondensierte aromatische Ringe bedeuten. Besonders bevorzugt sind die nur durch H-Atome substituierten Verbindungen.

Z und Z' sind ein- bzw. zweiwertige elektronegative Substituenten, wobei Z' z. B. für $—SO_2—$, —CO—, —SO—,

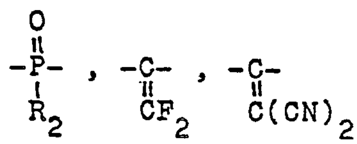

steht und Z eine einwertige elektronegative Gruppe wie $—NO_2$, =NO, $—CF_3$, —CN, Z'-Alkyl (Alkyl = $C_1$-$C_8$, vorzugsweise $C_1$-$C_4$) oder —Z'-Aryl (Aryl vorzugsweise Phenyl oder Naphthyl) bedeuten kann; $R_2$ steht für Alkyl ($C_1$-$C_8$, vorzugsweise $C_1$-$C_4$) oder Aryl (vorzugsweise Phenyl oder Naphthyl). n ist eine ganze Zahl von 1 bis 3. Für n = 1 kann R' und $R_1$ zusammengenommen auch eine direkte Bindung oder eine Alkylidenbrücke (vorzugsweise mit 1 bis 3 C-Atomen) oder Arylidenbrücke bedeuten. Aryliden steht dabei vorzugsweise für 1,2-Phenylen oder 1,2- bzw. 2,3-Naphthylen. X und X' sind gleich oder verschieden und bedeuten Halogenatome, wobei F und Cl besonders bevorzugt sind. Beispiele geeigneter Dihalogenverbindungen sind: 2,4-Dichlornitrobenzol, 2,4-Difluornitrobenzol, 2,4-Difluorbenzophenon, 4,4'-Dichlordiphenylsulfon, 4,4'-Difluordiphenylsulfon, 4,4'-Dichlorbenzophenon, 4,4'-Difluorbenzophenon, 4,4'-Dichlordiphenylsulfoxid, 4,4'-Difluordiphenylsulfoxid, 1,4-Bis(4'-chlorbenzoyl)benzol, 1,4-Bis(4'-fluorbenzoyl)benzol, 1,4-Bis(4'-chlorbenzolsulfonyl)benzol, 1,4-Bis(4'-fluorbenzolsulfonyl)benzol, 4,4'-Bis(4''-chlorbenzoyl)benzophenon, 4,4'-Bis(4''-fluorbenzoyl)benzophenon, 2,6-Bis(4'-fluorbenzoyl)naphthalin, 3,6-Difluorfluorenon, 3,6-Difluordibenzothiophen-S,S-dioxid, Bis-(4-fluorphenyl)phenylphosphinoxid, 1,1-Bis(4'-fluorphenyl)-2,2-dicyanäthylen.

Erfindungsgemäß verwendbare Halogenphenole sind zwei- oder mehrkernige Phenole, wobei das Halogenatom nicht an dem durch die Hydroxygruppe substituierten Benzolkern steht und durch eine elektronenanziehende Gruppe in ortho- oder para-Stellung aktiviert ist. Sie lassen sich durch die allgemeine Formel

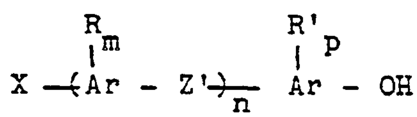 (4)

wiedergeben, wobei Ar einen Arylrest wie Benzol oder Naphthalin bedeutet, n, m und p ganze Zahlen von 1 bis 4 sind; R und R' können gleich oder verschieden sein und aus der Gruppe H, Alkyl, Aryl, Alkoxy oder Aryloxy ausgewählt sein. Z' hat die gleiche Bedeutung wie oben. Beispiele geeigneter Halogenphenole sind: 4-Fluor-4'-hydroxy-benzophenon, 4-Chlor-4'-hydroxy-benzophenon, 4-Fluor-4'-hydroxy-diphenylsulfon, 4-Chlor-4'-hydroxy-diphenylsulfon, 1-(4'-Hydroxybenzoyl)-4-(4''-chlorbenzoyl)benzol, 1-(4'-Hydroxybenzoyl)-4-(4''-fluorbenzoyl)benzol.

Die erfindungsgemäße Kondensationsreaktion wird entweder in Substanz oder in Gegenwart eines inerten Lösungsmittels durchgeführt, in denen das gebildete Polymere bei der Reaktionstemperatur löslich ist. Als Lösungsmittel kommen beispielsweise in Frage: Diphenylsulfon, cyclische aromatische Sulfone wie z. B. b,d-Dibenzothiophen-S,S-dioxid oder, weniger bevorzugt, Benzophenon und cyclische aromatische Ketone, wie z. B. Fluorenon. Derartige Lösungsmittel sind u. a. in der DE-A-2 803 873 beschrieben.

Die Reaktionstemperatur ist nach unten durch die Schmelztemperatur mindestens einer der Komponenten oder des Lösungsmittels und nach oben durch die Zersetzungstemperatur der Kondensationspartner bzw. des Lösungsmittels (falls eingesetzt) begrenzt. Sie liegt im allgemeinen zwischen 100 und 400 °C, vorzugsweise zwischen 180 und 350 °C, und hängt u. a. von der Reaktivität der

Kondensationspartner und der Art des verwendeten Lösungsmittel (falls eingesetzt) ab. Mit Vorzug verfährt man dabei so, daß man mit einer niedrigen Reaktionstemperatur beginnt und die Temperatur allmählich oder stufenweise steigert, wenn die Viskosität der Reaktionsmasse steigt.

Falls erforderlich, kann die Kondensationsreaktion in Gegenwart einer kettenabbrechenden Substanz (Regler) durchgeführt werden. Als solche kommen beispielsweise Methylchlorid, t-Butylchlorid, 4-Chlordiphenylsulfon, 4-Fluorbenzophenon udgl. in Frage.

Die erfindungsgemäß erhältichen Polymere eignen sich aufgrund ihrer hohen Temperaturbeständigkeit ihrer Hydrolysebeständigkeit und ihrer anderen Eigenschaften u. a. für Überzüge von elektrischen Kabeln, für Beschichtungen für Drähte und Monofile, für Formteile in elektrischen Geräten udgl.

In den nachfolgenden Beispielen, die soweit erfindungsgemäß, die vorliegende Erfindung näher erläutern, wurde die relative Viskosität der erhaltenen Polymeren immer an einer Lösung von 0,1 g des Polymeren in 100 ml konzentrierter Schwefelsäure bestimmt.

## Beispiel 1 (Vergleich)

0,099 8 mol (21,8 g) 4,4'-Difluorbenzophenon und 0,1 mol (11,0 g) Hydrochinon wurden mit 60 g Diphenylsulfon und 0,11 mol (15,1 g) wasserfreiem Kaliumcarbonat (gemahlen auf eine Korngröße von unter 0,3 mm) unter Zusatz von 0,000 4 mol (0,10 g) 4-Chlordiphenylsulfon als Regler unter Stickstoff in einen Vierhalskolben gefüllt, der mit Innenthermometer, Gaseinleitung, Rührer und Luftkühler ausgerüstet war. Der Kolbeninhalt wurde im Stickstoffstrom jeweils eine Stunde bei 200 °C, bei 250 °C und bei 320 °C gerührt. Nach einer Reaktionszeit von 10 min bei 200 °C wurde die Mischung so viskos, daß 40 g Diphenylsulfon zugegeben werden mußte. Bei beendeter Reaktion wurde die hellbeige zähflüssige Masse aus dem Kolben auf eine PTFE-Folie ausgegossen.

Die erkaltete Reaktionsmischung wurde in einer Mühle zerkleinert und mit Aceton und Wasser mehrfach ausgewaschen, um die anorganischen Bestandteile und das Lösungsmittel zu entfernen.

Das restliche weiße Polymerpulver wurde getrocknet, es wies einen Aschegehalt (bei 600 °C) von weniger als 0,1 % und einen Fluorgehalt von 0,01 % auf. Die Ausbeute betrug 86 %, bezogen auf eingesetztes Difluorbenzophenon. Die relative Viskosität war 1,64.

## Beispiel 2 (Vergleich)

Es wurde wie in Beispiel 1 verfahren, statt des Kaliumcarbonats wurden jedoch 0,11 mol (11,0 g) wasserfreies Calciumcarbonat eingesetzt. Nach der ungefähr dreistündigen Reaktionszeit war die Reaktionsmischung im Kolben immer noch sehr dünnflüssig. Die relative Viskosität des isolierten Polymeren betrug 1,12.

## Beispiel 3

Es wurde wie in Beispiel 1 verfahren. Statt des Kaliumcarbonats wurden jedoch 0,1 mol (10,0 g) wasserfreies Calciumcarbonat und 0,01 mol (1,4 g) wasserfreien Kaliumcarbonats eingesetzt. Beide Carbonate wiesen Teilchengrößen unter 300 μm auf. Die Reaktionsmischung wurde so rasch zäh, daß außer den 40 g nach 10 min noch zweimal 20 g-Portionen (bei 95 und 130 min) und zwei 50 g-Portionen (bei 135 und 165 min) von Diphenylsulfon zugegeben werden mußten. Das isolierte Polymer hatte eine relative Viskosität von 4,42.

Ähnliche Ergebnisse werden erhalten, wenn das Kaliumcarbonat durch Natrium-, Rubidium- oder Cäsiumcarbonat ersetzt wird.

Gleichfalls ähnliche Ergebnisse werden erhalten, wenn man anstelle von 4,4'-Difluorbenzophenon die folgenden Dihalogenverbindungen einsetzt :

4,4'-Difluordiphenylsulfon, 4,4'-Dichlordiphenylsulfon, 4,4'-Dichlorbenzophenon, 1,4-Bis(4'-chlorbenzoyl)benzol, 1,4-Bis(4'-fluorbenzoyl)benzol, 1,4-Bis(4'-fluorbenzoyl)diphenyläther, Bis(4-phenyl)phenylphosphinoxid, 2,2-Bis(4-fluorphenyl)-1,1-dicyanäthylen, 2,2-Bis(4-fluorphenyl)-1,1-difluoräthan, 2,4-Dichlornitrobenzol.

Analoges gilt für den Austausch von Hydrochinon durch folgende Diphenole :

Resorcin, 2-Methylhydrochinon, 2,2-Bis(4'-hydroxyphenyl)propan, 4,4'-Dihydroxybenzophenon, 1,1-Bis(4'-hydroxyphenyl)cyclohexan, 4,4'-Dihydroxydiphenyläther, 4,4'-Dihydroxydiphenyl, 1,4-Bis(4'-hydroxybenzoyl)benzol, 1,4-Bis(4'-hydroxybenzoyl)diphenyläther, 2,2-Bis(4'-hydroxyphenyl)-1,1,1,3,3,3-hexafluorpropan.

## Beispiel 4

Es wurde wie in Beispiel 1 verfahren. Statt des Kaliumcarbonats wurde jedoch eine Mischung von 0,1 mol (19,7 g) Bariumcarbonat und 0,01 mol (1,4 g) Kaliumcarbonat zugegeben. Nach 130 min wurden 50 g Diphenylsulfon hinzugefügt, da die Reaktionsmischung sonst zu zäh gewesen wäre. Das Polymer wurde beim Aufarbeiten auch mit verdünnter Salzsäure gewaschen. Asche- und Fluorgehalt wurden zu

0,4 % und 0,06 % bestimmt. Die relative Viskosität des erhaltenen Polymeren war 2,04.

Beispiel 5 (Vergleich)

Es wurde wie in Beispiel 4 verfahren, jedoch wurde nur Bariumcarbonat (0,11 mol) eingesetzt. Die Zugabe von Diphenylsulfon erübrigte sich, da die Reaktionsmischung stets dünnflüssig blieb. Die relative Viskosität des Polymeren, die nach Aufarbeiten gemessen wurde, betrug nur 1,13.

Beispiel 6

Es wurde wie in Beispiel 4 verfahren, jedoch 0,1 mol (14,77 g) Strontiumcarbonat und 0,01 mol (1,4 g) Kaliumcarbonat eingesetzt. Nach 10 min wurden 10 g, nach 80 min weiter 40 g und nach 100 min nochmals 50 g Diphenylsulfon zugefügt. Die Polymerausbeute nach Aufarbeiten lag bei 91 %, bezogen auf Difluorbenzophenon. Fluor- und Aschegehalt ergaben sich zu 0,015 % und 0,02 %. Die relative Viskosität des Polymeren war 2,01.

Beispiel 7 (Vergleich)

Es wurde wie in Beispiel 5 verfahren, statt des Bariumcarbonats verwendete man jedoch Strontiumcarbonat. Die relative Viskosität des Polymeren betrug nur 1,16.

Beispiel 8 und 9 (Vergleich)

Es wurde wie in Beispiel 5 verfahren, jedoch basisches Magnesiumcarbonat und basisches Zinkcarbonat statt des Bariumcarbonats eingesetzt. In beiden Fällen ließ sich kein Polymer gewinnen.

Beispiel 10

Es wurde wie in Beispiel 1 verfahren, jedoch 1,1 mol (81,3 g) wasserfreies Lithiumcarbonat eingesetzt. Die Viskosität der Reaktionsmischung stieg dabei nicht an.

Nach Zusatz einer geringen Menge (0,8 g) Kaliumcarbonat beobachtete man ein heftiges Aufschäumen der Reaktionsmischung und nach 150 min mußten 20 g Diphenylsulfon zugegeben werden, da die Masse zu zäh wurde. Die relative Viskosität des erhaltenen Polymeren betrug 2,21.

Beispiel 11

Es wurde wie in Beispiel 1 verfahren, aber 0,1 mol (10,01 g) wasserfreies Calciumcarbonat und 0,01 mol (1,06 g) wasserfreies Natriumcarbonat eingesetzt. Es wurde ein Polymer mit einer relativen Viskosität von 1,52 erhalten.

Beispiel 12

0,2 mol (43,2 g) 4-Hydroxy-4'-fluorbenzophenon und 0,10 mol wasserfreies Calciumcarbonat und 0,01 mol wasserfreies Kaliumcarbonat wurden zusammen mit 60 g Diphenylsulfon wie in Beispiel 1 kondensiert. Das isolierte Polymer war hellbeige und hatte eine relative Viskosität von 1,84.

Ähnliche Ergebnisse werden erhalten, wenn anstelle von 4-Hydroxy-4'-fluorbenzophenon eine der folgenden Verbindungen als Halogenphenol eingesetzt werden: 4-Chlor-4'-hydroxybenzophenon, 4-Chlor-4'-hydroxydiphenylsulfon, 4-Fluor-4'-hydroxydiphenylsulfon, 1-(4-hydroxybenzol)-4-(4''-fluorbenzoyl)benzol.

Beispiel 13

0,8 mol (229,7 g) Dichlordiphenylsulfon und 0,8 mol (88,08 g) Hydrochinon wurden in einem Dreihalskolben mit Rührer, Luftkühler und Stickstoffeinleitungsrohr unter Stickstoff bei 180 °C aufgeschmolzen. Unter Stickstoff wurde 0,8 mol (80 g) Calciumcarbonat und 0,08 mol (11,06 g) Kaliumcarbonat zugegeben. Die Reaktionsmischung wurde blaßgelb. Die Temperatur wurde dann auf 250 °C erhöht, worauf die Reaktion einsetzte, die Masse aufschäumte und dabei sehr zäh wurde.

Bei Aufheizen auf 350 °C ließ sich der Rührer kurzzeitig wieder bewegen, die Masse wurde nach wenigen Minuten erneut sehr zäh und wickelte sich vor den Rührer. Die Reaktion wurde daraufhin abgebrochen, nach Mahlen der festen Reaktionsmasse und Extrahieren ließ sich ein hellbeiges Polymer (240 g) mit einer relativen Viskosität von 1,56 isolieren.

Beispiel 14

Es wurde wie in Beispiel 3 verfahren, jedoch ein Gemisch von 4,4'-Difluorbenzophenon (0,8 mol) und

4,4-Dichlordiphenylsulfon (0,2 mol) eingesetzt. Das isolierte Polymer hatte eine relative Viskosität von 1,72. Es wies gemäß den NMR-Spektren Strukturen von

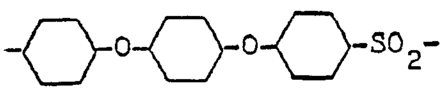 und 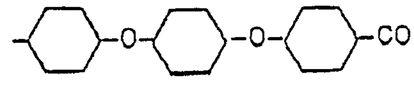

im Verhältnis der Einsatzmengen auf und kristallisierte aus der Schmelze.

## Patentansprüche

1. Verfahren zur Herstellung von aromatischen Polyäthern durch Kondensation der Reaktionspartner in Gegenwart von Metallcarbonaten als Kondensationshilfsmittel, gegebenenfalls in Gegenwart von änderen Zusatzstoffen sowie gegebenenfalls eines Lösungsmittels, dadurch gekennzeichnet, daß man als Kondensationshilfsmittel Metall-Carbonate einsetzt, die Gemische darstellen aus Metall-Carbonaten von
   (a) Lithium- und/oder Erdalkalicarbonat und
   (b) Natrium-, Kalium-, Rubidium- und/oder Cäsiumcarbonat.

2. Verfahren nach Anspruch 1, dadurch gekennzeichnet, daß als Kondensationshilfsmittel ein Gemisch aus (a) Calciumcarbonat und (b) Natrium- und/oder Kaliumcarbonat eingesetzt wird.

3. Verfahren nach Anspruch 1 oder 2, dadurch gekennzeichnet, daß das Mengenverhältnis von Metallcarbonat gemäß Gruppe (a) zu Metallcarbonat gemäß Gruppe (b) 40 : 60 bis 99 : 1 beträgt.

4. Verfahren nach einem oder mehreren der Ansprüche 1 bis 3, dadurch gekennzeichnet, daß die Kondensationsreaktion in Abwesenheit eines Lösungsmittels erfolgt.

5. Verfahren nach einem oder mehreren der Ansprüche 1 bis 4, dadurch gekennzeichnet, daß als Reaktionspartner in der Kondensationsreaktion zweiwertige Phenole und aromatische Dihalogenverbindungen, die durch elektronenanziehende Gruppen aktiviert sind, oder mehrkernige Halogenphenole, in denen das Halogen an einem anderen aromatischen Kern als die Hydroxylgruppe steht und durch mindestens einen elektronenanziehenden Substituenten in ortho- oder para-Stellung aktiviert ist, miteinander umgesetzt werden.

6. Verfahren nach einem oder mehreren der Ansprüche 1 bis 4, dadurch gekennzeichnet, daß als Reaktionspartner in der Kondensationsreaktion Gemische aus Halogenphenolen, in denen das Halogen an einem anderen aromatischen Kern als die Hydroxylgruppe steht und durch mindestens einen elektronenanziehenden Substituenten in ortho- oder para-Stellung aktiviert ist, und einander äquivalente Mengen aus Diphenolen und durch elektronenanziehende Gruppen aktivierte aromatische Dihalogenverbindungen miteinander umgesetzt werden.

7. Verfahren nach einem oder mehreren der Ansprüche 1 bis 6, dadurch gekennzeichnet, daß als Zusatzstoff (Regler) 4-Chlordiphenylsulfon oder 4-Fluorbenzophenon verwendet wird.

## Claims

1. A process for the preparation of aromatic polyethers by condensation of the reactants in the presence of metal carbonates as condensation agents, if appropriate in the presence of other additives and if appropriate in the presence of a solvent, wherein the condensation agents used are metal carbonates which represent mixtures of metal carbonates consisting of
   (a) lithium and/or an alkaline earth metal carbonate and
   (b) sodium, potassium, rubidium and/or cesium carbonate.

2. The process as claimed in claim 1, wherein a mixture of (a) calcium carbonate and (b) sodium carbonate and/or potassium carbonate is used as the condensation agent.

3. The process as claimed in claim 1 or 2, wherein the quantity ratio of metal carbonate from group (a) to metal carbonate from group (b) is 40 : 60 to 99 : 1.

4. The process as claimed in one or more of claims 1 to 3, wherein the condensation reaction is carried out in the absence of a solvent.

5. The process as claimed in one or more of claims 1 to 4, wherein dihydric phenols and aromatic dihalogen compounds which are activated by electron-attracting groups, or polynuclear halogenophenols in which the halogen is on a different aromatic nucleus from the hydroxyl group and is activated by at least one electron-attracting substituent in the ortho or para position, are reacted together as reactants in the condensation reaction.

6. The process as claimed in one or more of claims 1 to 4, wherein mixtures of halogenophenols in which the halogen is on a different aromatic nucleus from the hydroxyl group and is activated by at least one electron-attracting substituent in the ortho or para position, and mutually equivalent quantities of diphenols and aromatic dihalogen compounds activated by electron-attracting groups are reacted together as reactants in the condensation reaction.

7. The process as claimed in one or more of claims 1 to 6, wherein 4-chlorodiphenyl sulfone or 4-fluorobenzophenone is used as an additive (regulator).

**Revendications**

1. Procédé de préparation de polyéthers aromatiques par condensation des partenaires réactionnels en présence de carbonates de métaux comme adjuvants de condensation, éventuellement en présence d'autres additifs et, éventuellement, en présence d'un solvant, procédé caractérisé en ce qu'on utilise, comme adjuvants de condensation, des carbonates de métaux qui sont des mélanges de carbonates de métaux comprenant :

(a) le carbonate de lithium et/ou un carbonate de métal alcalinoterreux et

(b) le carbonate de sodium, de potassium, de rubidium et/ou de césium.

2. Procédé selon la revendication 1, caractérisé en ce qu'on utilise, comme adjuvant de condensation, un mélange constitué (a) de carbonate de calcium et (b) de carbonate de sodium et/ou de potassium.

3. Procédé selon l'une des revendications 1 et 2 caractérisé en ce que le rapport entre la quantité du carbonate métallique du groupe (a) à celle du carbonate métallique du groupe (b) est compris entre 40 : 60 et 99 : 1.

4. Procédé selon l'une quelconque des revendications 1 à 3, caractérisé en ce que la réaction de condensation est effectuée en l'absence d'un solvant.

5. Procédé selon l'une quelconque des revendications 1 à 4, caractérisé en ce qu'on fait réagir comme partenaires réactionnels, dans la réaction de condensation, des diphénols et des composés dihalogénés aromatiques activés par des radicaux attirant les électrons, ou des halogénophénols à plusieurs noyaux dans lesquels l'halogène est sur un noyau aromatique autre que celui qui porte le radical hydroxy et est activé par au moins un substituant attirant les électrons qui se trouve en ortho ou en para.

6. Procédé selon l'une quelconque des revendications 1 à 4, caractérisé en ce qu'on fait réagir ensemble, comme partenaires réactionnels dans la réaction de condensation, des mélanges d'halogénophénols dans lesquels l'halogène est sur un noyau aromatique autre que celui qui porte le radical hydroxy et est activé par au moins un substituant attirant les électrons qui se trouve en ortho ou en para, et des quantités équivalentes l'une par rapport à l'autre de diphénols et de composés dihalogénés aromatiques activés par des radicaux attirant les électrons.

7. Procédé selon l'une quelconque des revendications 1 à 6, caractérisé en ce qu'on utilise comme additif (régulateur) la chloro-4 diphénylsulfone ou la fluoro-4 benzophénone.